# EUROPEAN PATENT SPECIFICATION

(11) **EP 3 728 806 B1**
(45) Date of publication and mention of the grant of the patent: **19.10.2022**
(21) Application number: 18827123.3
(22) Date of filing: 21.12.2018
(51) Int. Cl.: F01N 3/20, F01N 13/18, B60K 13/04, B60K 15/03

(54) **VEHICLE SUCTION SYSTEM FOR LIQUIDS**
FAHRZEUGSAUGANLAGE FÜR FLÜSSIGKEITEN
SYSTÈME D'ASPIRATION DE LIQUIDES POUR VÉHICULE

(30) Priority: 22.12.2017 EP 17210458
(43) Date of publication of application: 28.10.2020
(73) Proprietor: Plastic Omnium Advanced Innovation And Research, 1130 Bruxelles (BE)
(72) Inventor: DHAUSSY, Franck, 60280 Margny-les-Compiegne (FR); LECRIVAIN, Franck, 60127 Fresnoy la Riviere (FR); LEONARD, Stéphane, 1090 Bruxelles (BE); DUEZ, Laurent, 1180 Uccle (BE)
(74) Representative: LLR
(86) International application number: PCT/EP2018/086792
(87) International publication number: WO 2019/122430

(56) References cited:
- EP-A1- 2 394 836
- DE-A1- 4 237 784
- DE-A1-102011 105 893
- DE-T2- 60 127 199

## Description

### Field of Invention

The invention relates to a vehicle suction system. Particular embodiments relate to vehicle suction systems for storing and injecting a liquid on-board a vehicle, such as an aqueous liquid, e.g. demineralised water or urea solution; or fuel.

### Background

The supply of liquid (e.g. fuel or aqueous liquids) in dynamic conditions, such as driving conditions, is a key function for liquid storage systems, especially for embedded vehicle tank systems with a pump circuit. Vehicle slopes and acceleration or breaking are creating movements of the liquid in the tank. At low fluid level in the tank, the liquid movements may result in the unpriming of the pump circuit. In order to limit this phenomenon, swirlpots equipped with one or more jet pumps may be used. When multiple jet pumps are used there is provided a suction point for each jet pump. In other words, each suction point needs a jet pump. Such systems require the use of a high pressure fluid flow and therefore energy.

In the prior art, various vehicle suction systems for aqueous liquid or fuel are well known, for example those discloses in the documents DE4237784A1, DE102011105893A1, EP2394836A1 and DE60127199T2. The vehicle suction systems disclosed in the documents all comprise more than one suctions points, which are still not enough dispersed and freely distributed in the systems to minimize dead volume. Besides, these systems could need relatively much energy consumption.

In water injection systems, water is injected into an air intake upstream of a combustion chamber or directly in the combustion chamber, when the load of the engine of a vehicle is high. By injecting water in the air stream, the air is cooled down, resulting in a higher density and hence more air per volume unit, enhancing the combustion. In that manner more power is obtained, i.e. the performance is boosted. The water for injection needs to be stored on-board the vehicle and needs to be available when the vehicle is in operation. In SCR (Selective Catalytic Reduction) systems an ammonia or ammonia precursor solution is stored on-board a vehicle, and injected in an exhaust line of a vehicle in order to reduce the NOx emissions.

For such water injection systems and SCR systems, using multiple jet pumps complicates the heating.

### Summary

It is a first object of the invention to provide a vehicle suction system resulting in an improved suction of liquid out of a compartment in a vehicle, wherein the required energy is reduced compared to prior art systems and/or wherein the suction system is less complex. According to a first aspect there is provided a vehicle suction system comprising a compartment and a suction line. The compartment is configured for storing a liquid which is an aqueous liquid. The suction line is arranged for sucking liquid out of the compartment. The suction line comprises at least one suction branch, and the at least one suction branch is provided with at least two suction orifices positioned at different positions in the compartment. At least one suction orifice of said suction orifices is provided with a blocking means configured for blocking at least a part of said suction orifice when the suction orifice is not in the liquid and for allowing liquid to be sucked through the suction orifice when the suction orifice is in the liquid, wherein the liquid is an aqueous liquid, and wherein the vehicle suction system comprises a suction line heater configured and arranged for heating at least a portion of the suction line, and further comprises at least one thermal conductive bridge connected between the suction line heater and the suction line to facilitate the heat conduction therebetween.

It is noted that in the context of the invention, the term "suction line" preferably refers to an assembly of pipes in the vehicle suction system which is arranged inside or outside the compartment and configured for sucking the liquid out of the compartment. Advantageously, the pipes are made of metal, for example, stainless steel or aluminium.

The term "suction branch" preferably refers to a section of the suction line which has one end connected to a pump. It is to be understood that two suction branches are two sections of the suction line which have each a distinct end connected to the pump. It should be noted that the end connected to the pump could be directly or indirectly connected to the pump. The end connected to the pump can be considered as a downstream end (directed towards the pump) and the end directed towards the compartment can be considered as an upstream end.

It should be understood that the ends not connected to the pump of two suction branches might be free ends or else might be connected together to form a loop.

The vehicle suction system has several suction points advantageously combined with a single suction line which may be connected to a simple pump circuit for sucking liquid out of the compartment. The at least two suction orifices are located at different positions in the compartment, such that liquid can be sucked from a first position when the liquid is in a first area of the compartment and from a second position when the liquid is in a second area of the compartment. Thanks to this, and even more in case there are at least two suction branches, the vehicle suction system can have more suction points that can be very dispersed and relatively freely distributed in the compartment. Further, by providing a suction point that may be out of the liquid with a blocking means as defined above, an amount of air or vapours that is sucked in the suction line can be limited or avoided. By judiciously choosing the positions it can be ensured that a good sucking is obtained, also when the liquid level is low and when a vehicle is driving. In other words, using embodiments of the invention the useful volume of the compartment in dynamic conditions may be increased, i.e. the dynamic dead volumes of the compartment can be reduced. Also, there is needed only a limited energy consumption to drive the plurality of suction points compared to prior art solutions where there is provided a suction line and jet pump for each suction point.

According to an exemplary embodiment, the vehicle suction system comprises at least two suction branches, both suction branches being preferably provided with at least two suction orifices. Thus, the vehicle suction system can be even more dispersed and relatively freely distributed in the compartment. The at least two suction branches may both have one downstream end connected to the pump and one upstream free end positioned in the compartment, or else may be connected together so that they form a loop and do not have a free end in the compartment.

According to an exemplary embodiment, the at least two suction orifices comprise two suction orifices at a distance of each other which is larger than 50 mm, more preferable larger than 100 mm. More preferably, the at least two suction orifices comprise two suction orifices at a distance of each other which is larger than 50% of the largest dimension (e.g. a width, length or diameter, depending on the shape of the compartment) of a bottom wall of the compartment. In an example, the at least two suction orifices comprise three suction orifices at a distance of each other which is larger than 30% of the largest dimension.

According to an exemplary embodiment, the at least two suction orifices comprise at least two suction orifices which are each provided with a blocking means configured for blocking at least partly said suction orifice when the suction orifice is not in the liquid and for allowing liquid to be sucked through the suction orifice when the suction orifice is in the liquid. Most preferably, all suction orifices will be provided with a blocking means. However, if a swirlpot or small sub-compartment is used inside the compartment, there may be provided one or more suction points in the swirlpot or small sub-compartment which may or may not be provided with a blocking means. In that manner, it will be possible to suck liquid in very dynamic conditions.

According to an exemplary embodiment, the compartment has a bottom wall, a side wall and top wall, wherein, in the mounted position of the compartment in the vehicle, the bottom wall corresponds with the lowest wall of the compartment. Preferably, the suction line has a line portion arranged against the bottom wall, or at a distance of the bottom wall, said distance being smaller than 5 cm, preferably smaller than 3 cm. Preferably, one or more suction orifices of the at least two suction orifices are at a distance of the bottom wall, which is smaller than 5 cm, preferably smaller than 3 cm. In that manner, it will be possible to suck liquid when the liquid level is low. According to an exemplary embodiment, the suction line is arranged at least partially in the compartment, preferably fully inside the compartment. However, according to another exemplary embodiment, the suction line may be arranged outside the compartment and may be provided with a plurality of line connection portions extending through a wall of the compartment and connecting the suction orifices in the compartment with the suction line outside of the compartment. According to an exemplary embodiment, the suction line has a line portion inside the compartment with a length which is larger than 200 mm, preferably larger than 300 mm, more preferably larger than 400 mm. Preferably, the suction line extends substantially along the bottom wall of the compartment, e.g. from one corner to another corner of the compartment or from one side to another side of the compartment.

According to an example, the blocking means is a closure means configured for closing said suction orifice when the suction orifice is not in the liquid and for allowing liquid to be sucked through the suction orifice when the suction orifice is in the liquid.

According to an exemplary embodiment, the blocking means comprises a floatable flap configured for allowing the aqueous liquid to pass through the suction orifice when the suction orifice is in the aqueous liquid and for blocking at least a part of said suction orifice when the suction orifice is not in the aqueous liquid. Optionally, the flap may be a pivotally mounted flap configured for being lifted away from the suction orifice when the suction orifice is in the liquid. Optionally the flap may be provided with a seal arranged for sealing the suction orifice in a closed position of the blocking means. Preferably a float configured to float in the liquid, is attached to the flap. The float may be made from a material having a lower density than the liquid, e.g. a foam material such as reticulated foamed nitrile rubber (NBR). Alternatively the float could be a component containing a hollow volume.

This is a robust and simple implementation which can be easily added to the suction orifices. It is noted that the blocking means may be integrated in a tubular portion which can then be inserted in the suction line at different positions.

According to an example, the blocking means comprises a controllable valve and a liquid detection sensor, wherein the controllable valve is connected for being controlled based on a measurement by the liquid detection sensor. The controllable valve may be e.g. an electro-valve.

According to another exemplary embodiment, the blocking means comprises a membrane or a filter configured to allow liquid to pass through the filter or membrane when in the liquid, and to block or limit the passage of air and/or vapours when the filter or membrane is not in the liquid. This blocking or limiting of the passage of air or vapours may be due to the fact that the filter or membrane is still wet, wherein the membrane or filter together with the liquid adhered to or absorbed in the membrane or filter at least partly blocks the suction orifice. Optionally the membrane or filter may be combined with a previously described blocking means.

According to the invention, the vehicle suction system further comprises a suction line heater configured and arranged for heating at least a portion of the suction line. The suction line heater preferably comprises at least one heater arranged around and/or adjacent a section of the suction line. In that manner it can be guaranteed that frozen liquid can be heated and sucked out of the compartment, also when the suction line is quite long. This is particularly interesting with an aqueous liquid which is subject to freeze at low temperatures. The suction line heater may comprise an electrical heater, preferably a flexible electrical heater. Alternatively or in addition, the suction line heater may comprise tubing for circulating engine coolant, wherein preferably the tubing is arranged at a distance which is smaller than 5 cm from a section of the suction line.

According to the invention, the vehicle suction system further comprises at least one thermal conductive bridge connected between the suction line heater and the suction line to facilitate the heat conduction therebetween. In this manner, the aqueous liquid can be more quickly and smoothly sucked especially under extreme weather. The thermal conductive bridges can be made of any suitable material having good thermal conductivity, preferably of metal, especially preferably of aluminum. More preferably, the thermal conductive bridges are made of a material of multiple layers, for example, a copper layer sandwiched between two aluminum layers. This is particularly advantageous as the copper has a better thermal conductivity than the aluminum but is more sensitive to corrosion.

According to an exemplary embodiment, the vehicle suction system further comprises a pump circuit connected to the suction line and configured for pumping liquid out of the compartment through the suction line. Preferably, the pump circuit comprises at least one of a jet pump and a feed pump.

According to an exemplary embodiment, the pump circuit comprises a jet pump and a feed pump. The feed pump unit is connected for pumping liquid from another additional compartment to a feed outlet. The feed pump unit is further connected for pumping liquid from said other additional compartment through the feed pump unit, through a pressure inlet of the jet pump to an outlet of the jet pump. The outlet of the jet pump is arranged for returning liquid from the suction inlet and from the pressure inlet to said other additional compartment. Preferably a non-return valve, typically a check valve, is included in the flow path, downstream of the feed pump unit, in a normal feed mode. The non-return valve avoids that liquid can flow in reverse direction through the path towards an outlet of the feed pump unit. More preferably, the non-return valve is arranged between the outlet of the feed pump unit and the pressure inlet of the jet pump. In that way the non-return valve avoids that liquid in the jet pump can return to an outlet of the feed pump unit.

The jet pump may be arranged in a line extending upwardly in the other additional compartment, preferably with the pressure inlet lower than the outlet of the jet pump. In that manner the liquid is circulated upwardly. This is especially advantageous when the other additional compartment is provided at a bottom wall of the compartment, wherein an inlet of the feed pump unit is preferably located below the minimum liquid level in the other additional compartment, e.g. at less than 10 cm from the plane of the bottom wall of the other additional compartment.

According to another exemplary embodiment, the pump circuit comprises a feed pump unit with a feed outlet and with a feed inlet connected to the suction line; wherein optionally the feed pump unit may be provided in another additional compartment. In possible examples the feed pump unit may comprise a two-stage feed pump, e.g. a turbine pump with an inner and outer turbine, wherein the outer turbine may be connected to the suction line to suck liquid from the compartment to the other additional compartment, and wherein the inner turbine is arranged to suck liquid out of the other additional compartment.

According to an exemplary embodiment, the compartment is a tank, and the other additional compartment is located in the tank. The other additional compartment may be integrated in a module located in bottom wall of the tank, or may be integrated with the bottom wall of the tank. The other additional compartment may then take the form of a bowl or swirl pot located in the tank. Preferably the tank is provided with a filler pipe which is arranged such that both the compartment and the other additional compartment can be filled with liquid flowing through the filler pipe.

According to another exemplary embodiment, the other additional compartment is a first tank, and the compartment is a second tank. Preferably an overflow line extends between the first tank and the second tank, wherein one of said first and said second tank may be at a higher location than the other one of said first and said second tank, the higher one being provided with a filler pipe. In another possible example the first tank is provided with a filler pipe and a filler line extends between the filler pipe and the second tank.

According to an example the other additional compartment has a substantially cylindrical shape with a diameter between 100 mm and 200 mm, and a maximum height between 50 and 100 mm. The volume of the other additional compartment may be e.g. between 0.1 and 1.5 liter, preferably between 0.3 and 1 liter. These dimensions will allow a sufficient amount of liquid to be present in the other additional compartment, also when a vehicle is driving.

For aqueous liquids, the volume of the (main) compartment may be e.g. between 5 and 15 liter, preferably between 8 and 13 liter. In case the vehicle suction system would be used for fuel, the volume of the (main) compartment would be e.g. between 20 and 120 liter.

According to an exemplary embodiment, the vehicle suction system further comprises an air intake line upstream of a combustion chamber of an internal combustion engine; an injector configured for injecting liquid in the air intake line or in the combustion chamber; a feed line between the feed outlet of the feed pump unit and the injector, for feeding said injector with liquid out of the other additional compartment.

The liquid is preferably an aqueous liquid, even if it could also be a fuel. The aqueous liquid may be a solution containing at least 90% water, more preferably at least 95% water, and most preferably at least 98% water. The aqueous liquid may be e.g. demineralized water, such as demineralized water with an electrical conductivity close to zero. In other examples an amount of methanol may be added to the aqueous liquid to lower the freezing point. Also, the aqueous liquid may be an aqueous urea solution or an aqueous ammonia solution. The fuel may be a gasoline, a diesel, a liquid petroleum gas (LPG), a compressed natural gas (CNG).

The feed pump unit may comprise a gear pump with a motor. The jet pump is a pump which does not comprise a motor and which comprises a venturi device between the pressure inlet and the outlet of the jet pump.

### Brief description of the figures

The accompanying drawings are used to illustrate presently preferred examples and an embodiment of the present invention. The above and other advantages of the features and objects of the invention will become more apparent and the invention will be better understood from the following detailed description when read in conjunction with the accompanying drawings, in which:
Figure 1 illustrates schematically a cross-section of an exemplary vehicle suction system;
Figure 2 illustrates schematically a cross-section of an exemplary vehicle suction system;
Figures 3A, 3B, 3C, 3D and 3E illustrate four different examples of a suction line provided with a suction opening which is closeable by a blocking means, viewed in a schematic cross-section through the suction line;
Figures 4A and 4B illustrate schematically two perspective views of an insert piece comprising a suction opening, which insert piece can be inserted in a suction line ; wherein figure 3A illustrates the blocking means in a closed position, and figure 3B illustrates the blocking means in an open position;
Figure 5 illustrates schematically an exemplary vehicle suction system with a jet pump and two suction branches;
Figure 6 illustrates schematically an exemplary vehicle suction system with a jet pump and two tanks;
Figure 7 illustrates schematically another exemplary vehicle suction system with a jet pump and two tanks;
Figure 8 illustrates schematically a perspective view, looking from the top of an exemplary vehicle suction system;
Figure 9 illustrates schematically an exemplary vehicle suction system with a compartment having a bottom side with an irregular shape;
Figure 10 illustrates schematically an exemplary vehicle suction system with a feed pump;
Figures 11A and 11B illustrate a more detailed exemplary vehicle suction system comprising a suction line extending through a wall of a swirlpot; and
Figure 12 illustrates a partial view of a vehicle suction system according to an embodiment with a plurality of thermal conductive bridges.

### Description of embodiments

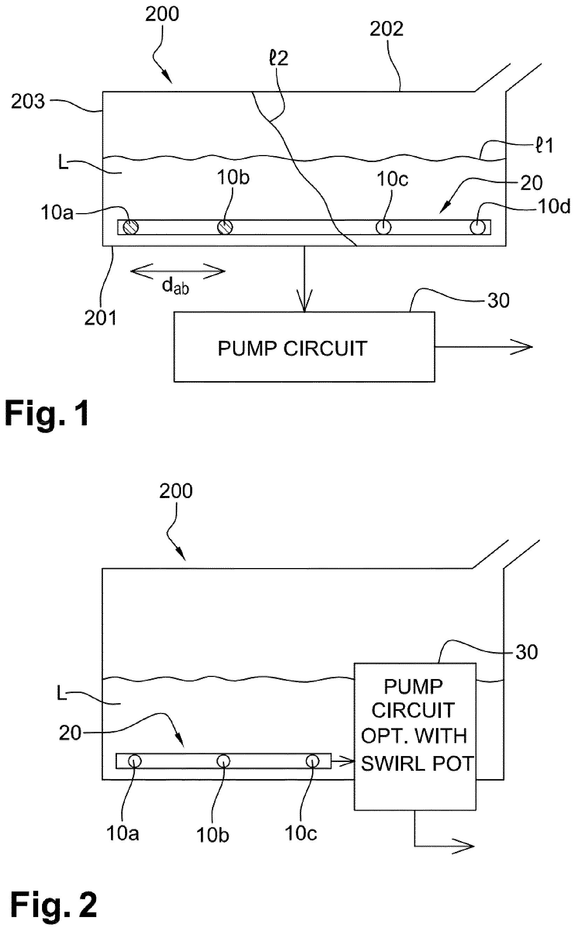

Figure 1 illustrates a vehicle suction system comprising a compartment 200 for storing a liquid L, e.g. an aqueous liquid or a fuel. The vehicle suction system further comprises a suction line 20 arranged for sucking liquid L out of the compartment 200, comprising here one suction branch. The suction line 20 is provided with a plurality of suction orifices 10a, 10b, 10c, 10d positioned at different positions in compartment 200. The illustrated vehicle suction system further comprises a pump circuit 30 which is configured for sucking liquid L from the compartment 200 through the suction orifices 10a, 10b, 10c, 10d to a destination where the liquid L is needed.

Each suction orifice 10a, 10b, 10c, 10d is provided with a blocking means (not illustrated in figure 1) configured for at least partly blocking the respective suction orifice 10a, 10b, 10c, 10d when the respective suction orifice is not in the liquid, and for allowing liquid to be sucked through the respective suction orifice 10a, 10b, 10c, 10d when the suction orifice is in the liquid. In a vehicle, when a car is driving, the liquid L in the compartment 200 is moving around within the compartment 200: indeed when e.g. turning left or right, or when breaking or accelerating, the liquid L may be moved to the left or to the right or upward or downward, or to the front or to the back. In order to guarantee an efficient sucking during driving it is advantageous to close the suction orifices which are not in the liquid, in order to avoid that air and/or vapors are sucked by the pump circuit 30. This is illustrated in figure 1, where 11 illustrates the liquid level in the tank 200 at rest, whilst 12 illustrates a possible liquid level in the tank during driving. When the liquid level corresponds with 12, the first two suction orifices 10a, 10b will be open, whilst the other suction orifices 10c, 10d will be closed or at least partly blocked. At rest (liquid level 11), all suction orifices 10a, 10b, 10c, 10d may be open.

In figure 1, the pump circuit is arranged outside of the compartment 200. However, as illustrated in figure 2, the pump circuit 30 may be arranged at least partially inside the compartment 200, e.g. partially inside the compartment 200 and partially outside the compartment 200. Figure 2 further illustrates that the pump circuit 30 may contain an optional swirlpot in which the liquid L of the compartment 200 is sucked before pumping it to a destination.

In order to be able to suck liquid L from various parts of the compartment 200, the suction orifices 10a, 10b, 10c, 10d are preferably arranged at different extremities of the compartment 200, e.g. at or close to different sides, preferably bottom sides of the compartment 200; or in or close to different corners, preferably bottom corners, of the compartment 200. Preferably, the distance between two suction orifices 10a, 10b is at least 50 mm, more preferably at least 100 mm. It is noted that in the schematic illustrations of figures 1 and 2, the suction orifices 10a, 10b, 10c, 10d are drawn to be on a line. However, in practice the suction orifices 10a, 10b, 10c, 10d may be in or near various corners of the compartment 200, preferably in the bottom corners of the compartment 200.

The compartment 200 has a bottom wall 201, a side wall 203 and a top wall 202, wherein, in the mounted position of the compartment 200 in the vehicle, the bottom wall 201 corresponds with the lowest wall of the compartment 200. The suction line 20 has a line portion (in figures 1 and 2 the line portion corresponds with the entire suction line) arranged against the bottom wall 201 or at a small distance of the bottom wall 201. For example, a small distance may be smaller than 5 cm, preferably smaller than 3 cm. It is noted that in other examples the suction line 20 may be arranged at a larger distance of the bottom wall 201, whilst providing the suction points 10a, 10b, 10c, 10d (using e.g. connection arms extending between each suction point and the suction line 20) at a small distance of the bottom wall 201, for example at a distance may be smaller than 5 cm, preferably smaller than 3 cm. Indeed, even though the liquid L may move in the compartment 200, it will typically be closer to the bottom wall 201 than to the top wall 202. For that reason it is advantageous to arrange the suction orifices 10a, 10b, 10c, 10d in the lower half of the compartment 200, and in particular near the bottom wall 201.

In figures 1 and 2 the suction line is arranged entirely inside the compartment 200. However, as will be described in connection with other examples, the suction line 20 may also be located at least partially outside the compartment 200.

Preferably the suction line 20 has a line portion (in figure 1 and 2 this is the entire suction line) inside the compartment 200 with a length which is larger than 200 mm, preferably larger than 300 mm, and more preferably larger than 400 mm. More in particular, the length of the suction line 20 is preferably such that multiple bottom corners or bottom sides of the compartment 200 may be reached.

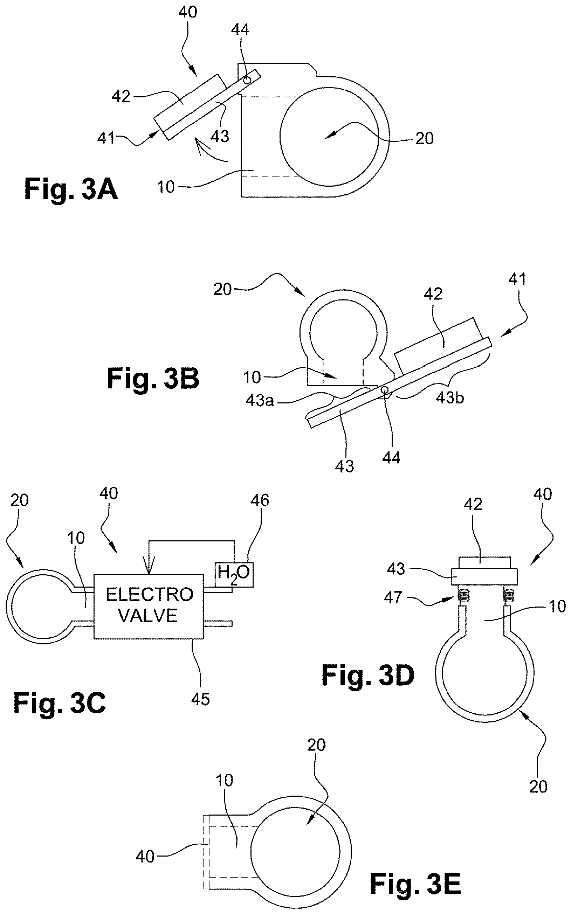

Figures 3A, 3B, 3C, 3D and 3E illustrate four variants of blocking means 40 for use in a vehicle suction system.

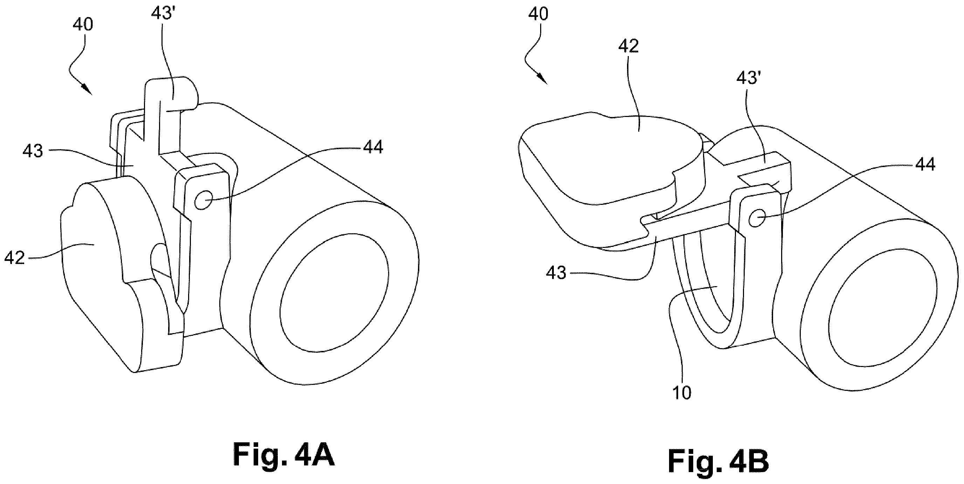

Figure 3A illustrates a cross-section of a suction line 20 which is provided with a suction orifice 10 which is closable by a blocking means 40. The blocking means 40 comprises a flap 41 which is floatable and, more precisely, pivotally mounted around a pivot axis 44 for pivoting between a closed position where the flap 41 closes the suction orifice 10, and an open position in which the flap 41 is moved away from the suction orifice 10. In order to open when the suction orifice 10 is in the liquid L, the flap 41 is configured to be lifted away from the suction orifice 10 when the suction orifice is in the liquid 10. To that end, the flap 41 may comprise a floatable portion (also called float) 42 attached to a support portion 43. The floatable portion 42 may be made in a material with a lower density than the density of the liquid L, or may be a component comprising an air volume. In figure 3A, the suction orifice 10 is provided on a side of the suction line 20, wherein the suction line 20 is drawn in a position mounted in the vehicle The flap 41 can easily move upward when the suction orifice 10 is in the liquid. An example is illustrated in figures 4A and 4B in the closed and open position of the blocking means 40, respectively. In figures 4A and 4B it can be seen that the flap 42, 43 may be provided with a stopper portion 43' to avoid that the flap 42, 43 is lifted too much and flips over to the other side.

Figure 3B illustrates another example where the suction orifice 10 is arranged at the bottom side of the suction line 20. The flap 41 may be implemented as a sort of lever device with a first support portion 43a intended to close the suction orifice 10 and a second support portion 43b extending at another side of the pivot axis 44. This other support portion 43b is provided with the floatable part 42. The flap 41 is further designed such that it will close the suction orifice 10 by gravity when the suction orifice 10 is not in the liquid, whilst the support portion 43a will pivot away from the suction orifice 10 when the suction orifice 10 is in the liquid, causing the floatable part 42 to rise. Instead or in addition to using gravity, a spring means may be used to move the flap 41 to a closed position when not in the liquid.

Figure 3C illustrates a blocking means 40 comprising a controllable valve 45 and a liquid detection sensor 46, wherein the controllable valve 45 is connected for being controlled based on a measurement by the liquid detection sensor 46. The controllable valve may be e.g. an electro-valve.

Figure 3D illustrates a blocking means 40 comprising a liftable portion 43, 42 comprising a support 43 and a float 42. The liftable portion 43, 42 is attached using spring means 47 configured to press the liftable portion 43, 42 against the suction orifice 10 when the suction orifice 10 is not in the liquid and to allow the liftable portion 43, 42 to move upward when the suction orifice 10 is in the liquid.

Figure 3E illustrates an example where the blocking means 40 are in the form of a membrane or a filter spanning the suction orifice 10 and configured to allow liquid to pass through the filter or membrane 40 when in the liquid, and to block or limit the passage of air and/or vapours when the filter or membrane is not in the liquid. The filter may be e.g. a so-called depth media filter. The membrane may be e.g. a hydrophilic membrane. This blocking or limiting of the passage of air and/or vapours may be due to the fact that the filter or membrane is still wet, wherein the membrane or filter together with the liquid adhered to or absorbed in the membrane or filter at least partly blocks the suction orifice.

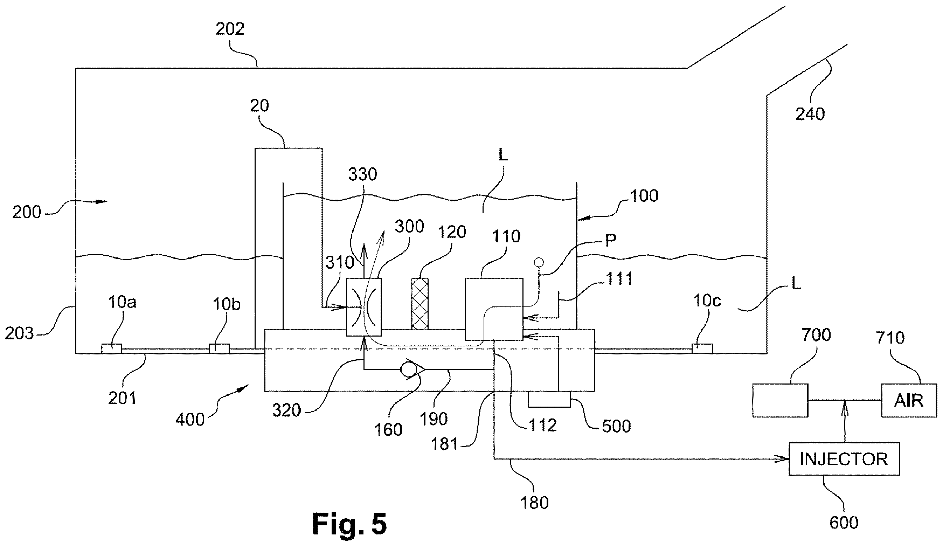

Figure 5 illustrates a vehicle system storing a liquid, e.g. an aqueous liquid L. The vehicle system comprises a first compartment 100 for storing liquid L, a second compartment 200 for storing a liquid L, and a module 400. In this example second compartment 200 is a tank, and first compartment 100 is a bowl integrated in module 400, such that the bowl is positioned in the second compartment 200. Module 400 is arranged in an opening in a wall of tank 200. Tank 200 is provided with a filler pipe 240 for filling tank 200, and hence also compartment 100, with liquid L. Tank 200 has a bottom wall 201, a top wall 202 and a side wall 203 connecting the bottom wall 201 with the top wall 202. An opening is arranged in bottom wall 201. In the mounted position of tank 200, bottom wall 201 corresponds with the lowest face of tank 200. Module 400 is mounted in the opening in bottom wall 201 of tank 200, e.g. by welding or by any other suitable connection means, e.g. using a ring-nut system screwed onto a thread on tank 200, or using a closure system of the bayonet type. In another non-illustrated example the opening may be arranged in side wall 203, in a lower half of the tank 200.

Module 400 comprises a feed pump unit 110, a jet pump 300, and a heater 120. Feed pump unit 110 is connected for pumping liquid L from the first compartment 100 to a feed outlet 181. Feed outlet 181 is intended for being connected to a feed line 180 for injecting liquid L by an injector 600, e.g. in an air intake line 710 upstream of a combustion chamber 700 of an internal combustion engine. Alternatively aqueous liquid may be injected directly in combustion chamber 700 of the internal combustion engine. More generally, for the described application, the liquid may be injected anywhere as long as the injection is such that the air injected in combustion chamber 700 is cooled. Feed line 180 extends between feed outlet 181 and injector 600, for feeding injector 600 with liquid out of first compartment 100.

Jet pump 300 has a suction inlet 310, a pressure inlet 320 and an outlet 330. Feed pump unit 110 is further connected for pumping liquid along a flow path P. The flow path P extends from an inlet 111 of feed pump unit 110 to an outlet 112 of feed pump unit 110 through a line 190 between outlet 112 and pressure inlet 320 of jet pump 300, to outlet 330 of jet pump 300. Suction inlet 310 is connected to a suction line 20 arranged for receiving liquid from the second compartment 200. The suction line 20 is provided with a plurality of suction points 10a, 10b, 10c which may be provided with blocking means as described above. The suction points 10a, 10b, 10c are preferably arranged close to the bottom wall 201 at different positions in the compartment 200.

Outlet 330 of jet pump 300 is arranged for returning liquid from suction inlet 310 and from pressure inlet 320 to first compartment 100. The vehicle system further comprises a controller 500 configured for controlling feed pump unit 110. Controller 500 may be configured to pump liquid from second compartment 200 to first compartment 100 when the level of the liquid in first compartment 100 is below a predetermined level. Controller 500 is shown mounted on module 400, but the skilled person understands that it may also be located remotely from module 400.

Heater 120 is configured and arranged for heating at least said flow path P. Heater 120 may be arranged e.g. between feed pump unit 110 and jet pump 300, and/or around feed pump unit 110 and jet pump 300. Preferably heater 120 is arranged either partially or fully inside first compartment 100 or in a wall delimiting first compartment 100.

A non-return valve 160, typically a check valve, may be included in the flow path P, downstream of the feed pump unit 110, preferably in a line section between the outlet 112 of the feed pump unit 110 and the pressure inlet 320 of the jet pump 300.

Outlet 112 of feed pump unit 110 is preferably located at the bottom of feed pump unit 110. Further, preferably jet pump 300 is arranged in a line section extending upwardly in module 400, such that the liquid is recirculated upwardly and returned in first compartment 100 at a position which is higher than pump outlet 112, and preferably also higher than pump inlet 111.

Advantageously, the suction line 20 as shown in figure 5 comprises two suction branches arranged in opposites directions in the compartment 200, wherein one suction branch comprises two suction orifices 10a and 10b located at different positions and the other suction branch comprises one suction orifices 10c. As schematically shown by the dotted line in figure 5, the two suction branches may be connected into the jet pump 300 via the suction inlet 310.

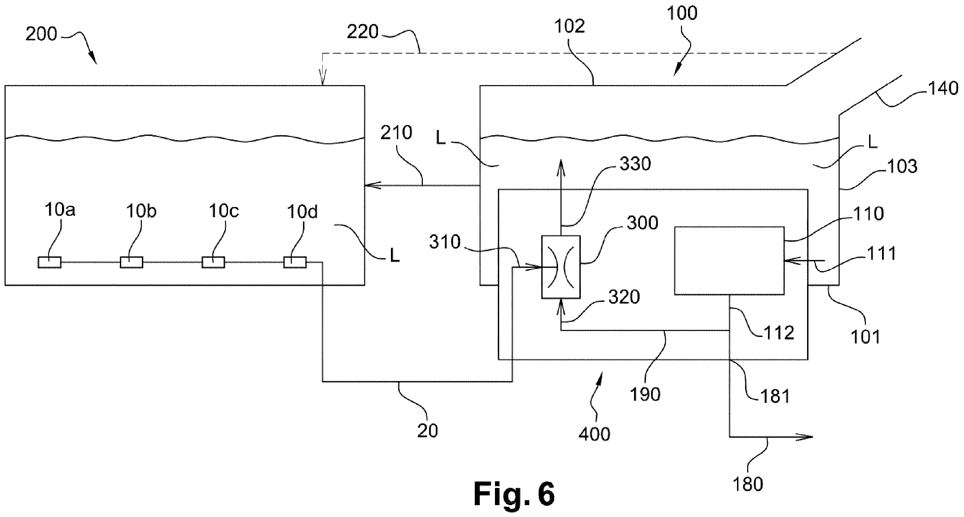

Figure 6 illustrates another vehicle system storing a liquid, e.g. an aqueous liquid L. The vehicle system comprises a first tank 100 for storing liquid L, a second tank 200 for storing a liquid L, and a module 400. The module 400 is arranged in an opening in a wall of first tank 100. First tank 100 is provided with a filler pipe 140 for filling first tank 100, and via an overflow line 210, also second tank 200, with liquid L. First tank 100 has a bottom wall 101, a top wall 102 and a side wall 103 connecting bottom wall 101 with top wall 102. An opening is arranged in bottom wall 101. In the mounted position of first tank 100, bottom wall 101 corresponds with the lowest face of first tank 100. Module 400 is mounted in the opening in bottom wall 101 of first tank 100, e.g. by welding or by any other suitable connection means. In another non-illustrated example the opening may be arranged in side wall 103, in a lower half of the tank 100.

Module 400 comprises a feed pump unit 110, a jet pump 300, and optionally also a heater 120 (not shown in figure 6). Feed pump unit 110 is connected for pumping liquid L from the first compartment 100 to a feed outlet 181 intended for being connected to a feed line 180 as in the embodiment of figure 5. Jet pump 300 has a suction inlet 310, a pressure inlet 320 and an outlet 330. Feed pump unit 110 is further connected for pumping liquid along a flow path. The flow path extends from an inlet 111 of feed pump unit 110 to an outlet 112 of feed pump unit 110 through a line 190 between outlet 112 and pressure inlet 320 of jet pump 300, to outlet 330 of jet pump 300. Suction inlet 310 is connected to a suction line 20 arranged for receiving liquid from second tank 200. The suction line 20 is provided with a plurality of suction points 10a, 10b, 10c, 10d which may be provided with blocking means as described above. The suction points 10a, 10b, 10c, 10d are preferably arranged close to the bottom wall 201 at different positions in the compartment 200.

Outlet 330 of jet pump 300 is arranged for returning liquid from suction inlet 310 and from pressure inlet 320 to first tank 100. The vehicle system may further comprise a controller (not shown) configured for controlling feed pump unit 110. The controller may be configured to pump liquid from second tank 200 to first tank 100 when the level of the liquid in first tank 100 is below a predetermined level.

First tank 100 may be positioned in a vehicle at a higher level than second tank 200. In an alternative example first tank 100 and second tank 200 may be positioned at more or less the same height and a filler line 220 may be provided between filler pipe 140 of first tank 100 and second tank 200.

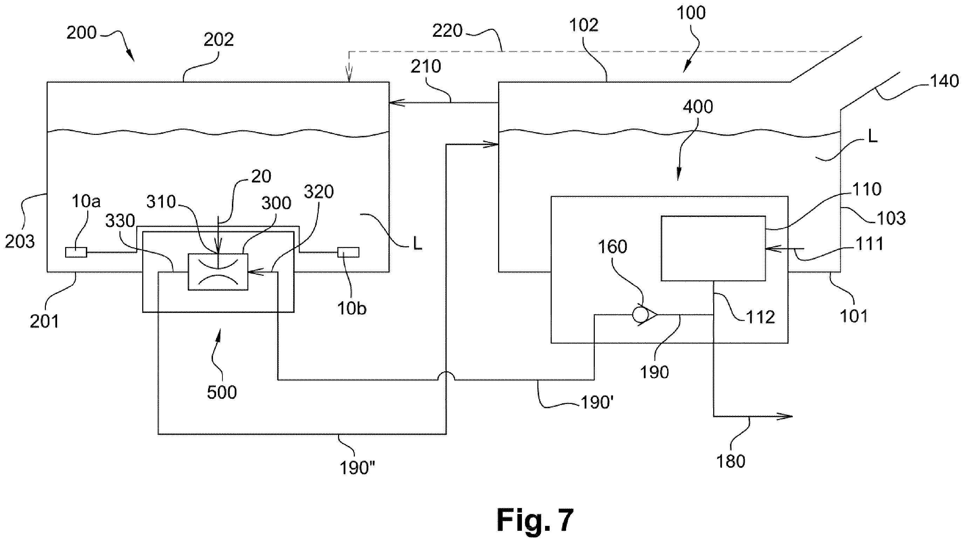

Figure 7 illustrates an example which is similar to the example of figure 6 with this difference that jet pump 300 is not arranged in module 400 but is arranged in a separate module 500 mounted in an opening in bottom wall 201 of second tank 200. Line sections 190 and 190' extend between outlet 112 of feed pump unit 110 and pressure inlet 320. Line section 190 is integrated in module 400, and line section 190' is located outside first tank 100. A further line section 190" connects outlet 330 of jet pump 300 with first tank 100 to return liquid from the jet pump 300 to first tank 100. A check valve 160 is arranged in line section 190. As in the example of figure 5, module 400 may comprise additional components such as a heater, a level sensor, a quality sensor, a bio-decontamination device, a filter, etc.

The liquid is preferably an aqueous liquid containing at least 90% water, more preferably at least 95% water, and most preferably at least 98% water. The aqueous liquid is e.g. demineralized water. In other examples an amount of methanol may be added to the aqueous liquid to lower the freezing point.

In examples, the feed pump unit 110 is configured to be able generate a flow of between 60 and 100 kg/h through the feed line 180. Further, the controller is preferably configured to control pump unit 110 in function of the load of the engine. When the load reaches a predetermined threshold, the feed pump unit 110 is made to pump with a flow speed within a predetermined range.

Although a gear pump is advantageous for use in examples , also other pumps may be used, e.g. a gerotor pump, a turbine pump, a membrane pump, a piston pump.

The heater120 may be an electrical heater, e.g. a flexible electrical heater comprising a flexible sheet with integrated electrical tracks. The flexible sheet may comprise two flexible films, wherein at least one electrical track is arranged between the two flexible films. The sheet may be a sheet with a central portion, and at least one flap and/or a plurality of flexible tentacles may extend from the central portion in the tank or on/in the module. Using an electrical heater has the advantage that immediate heater power is available reducing the start-up time at cold temperatures. A supply rate of molten aqueous liquid by the electrical heater may be between 150 and 350 g/h. The electrical heater may be controlled by a controller in function of the engine temperature, in order to heat more when the engine temperature is too low and less when the engine temperature is increasing.

A tank 100, 200 may comprise a bottom shell and a top shell. The tank 100, 200 may be made of a plastic material, preferably a polyolefin material, e.g. a material comprising PE or PP.

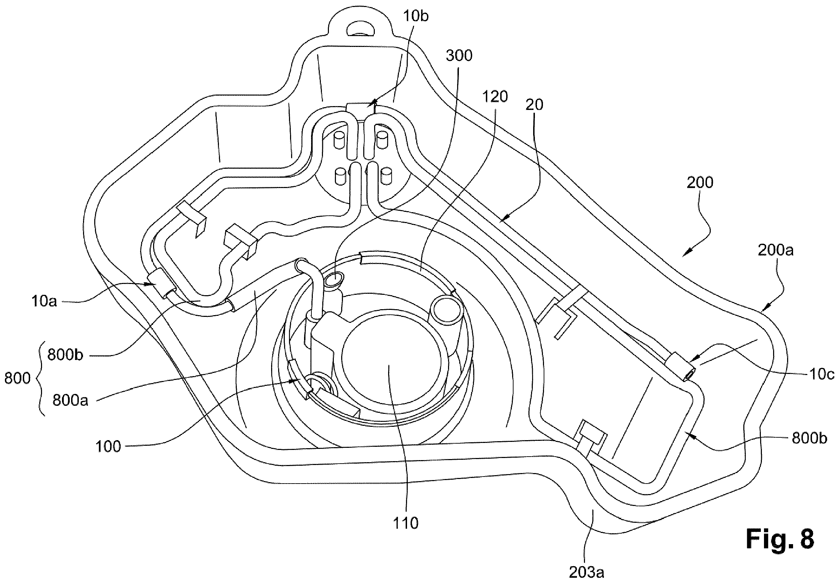

Figure 8 illustrate a vehicle system for storing a liquid, e.g. an aqueous liquid. The vehicle system comprises a first compartment 100 for storing liquid, a second compartment for storing a liquid (only a bottom shell 200a of the second compartment is shown), and a module 400. The second compartment is a tank, and the first compartment 100 is a bowl integrated in module 400, such that the bowl is positioned in the bottom shell 200a of the second compartment. Module 400 is arranged in an opening in a wall of bottom shell 200a. A top shell (not shown) may be provided with a filler pipe for filling the tank, and hence also compartment 100, with liquid. There may be provided a fill valve (not shown), e.g. an umbrella valve or a disc valve, in an opening in the first compartment 100, preferably in an opening in the bottom wall 101 of the first compartment 100. The fill valve is configured to allow the liquid L to enter the first compartment 100 during the tank's first fill, whilst it does not allow that liquid leaves the first compartment 100.

Bottom shell 200a has a bottom wall 201 and a side wall 203a for connection to a top shell (not shown). An opening is arranged in bottom wall 201. In the mounted position of tank, bottom wall 201 corresponds with the lowest face of tank. Module 400 is mounted in the opening in bottom wall 201 of the tank, e.g. by welding or by any other suitable connection means, e.g. using a ring-nut system screwed onto a thread on tank, or using a closure system of the bayonet type.

Module 400 comprises a feed pump unit 110, a jet pump 300, and a heater 120. Feed pump unit 110 is connected for pumping liquid L from the first compartment 100 to a feed outlet (not shown but may be similar to the embodiment of figure 5). Feed outlet is intended for being connected to a feed line for injecting liquid by an injector, e.g. in an air intake line upstream of a combustion chamber of an internal combustion engine. Alternatively liquid may be injected directly in combustion chamber of the internal combustion engine.

Jet pump 300 has a suction inlet 310, a pressure inlet 320 and an outlet 330. Feed pump unit 110 is further connected for pumping liquid along a flow path extending from an inlet of feed pump unit 110 to an outlet of feed pump unit 110, through jet pump 300, to outlet 330 of jet pump 300. Suction inlet 310 is connected to a suction line 20 arranged for receiving liquid from the second compartment. The suction line 20 is provided with a plurality of suction points 10a, 10b, 10c which may be provided with blocking means as described above. The suction points 10a, 10b, 10c are preferably arranged close to the bottom wall 201 at different positions in the compartment 200.

The pump outlet (not shown) of feed pump unit 110 is preferably located at the bottom of feed pump unit 110. Further, preferably jet pump 300 extends upwardly in module 400, such that the liquid is recirculated upwardly and returned in first compartment 100 at a position which is higher than the pump outlet, and preferably also higher than the pump inlet.

Preferably, the first compartment 100 has the shape of a bowl, e.g. a substantially cylindrical bowl. The bowl may have a diameter between 100 mm and 200 mm, e.g. between 120 and 180 mm. The bowl may have a maximum height between 50 and 100 mm, e.g. between 60 mm and 90 mm. The volume of the tank formed by bottom shell 200a and a top shell may be between 5 and 15 liter, e.g. between 8 and 13 liter.

The feed pump unit 110 may comprise a motor 117 (e.g. a BLDC motor) and a gear pump 115.

The heater 120 comprises a heated portion which is provided adjacent the inner wall of first compartment 100. The heater is preferably an electrical heater. The heater 120 comprises a flexible heater portion arranged against the inner wall of the first compartment, preferably along substantially the entire cylindrical inner wall, optionally with flexible tentacles (not shown) extending in and/or around various areas of the first compartment 100. The bowl 100 may be provided with recesses through which the tentacles 123 extend. However, it is also possible to provide non-flexible electrical heating elements (not shown), e.g. PTC heating elements, attached to or integrated in module 400, e.g. attached to the inside and/or the outside of the first compartment, or in wall elements of first compartment 100. A further heater portion (not shown) may be provided at the bottom of the first compartment, below feed pump unit 110.

The vehicle system of figure 8 further comprises a suction line heating system 800 configured for heating at least a portion of the suction line 20. The suction line heating system 800 comprises a second heater 800a arranged around a section of the suction line 20, preferably at least a section of the suction line 20 between an inner space of the first compartment 100 and a bottom wall 201 of the second compartment. The second heater 800a extends around a section of the suction line which runs downward from an upper side of the first compartment to the bottom wall 201 of the second compartment. The first heater 120 and/or the second heater 800a may be a flexible electrical heater, and the first heater 120 may be connected to the second heater 800a.

The suction line heating system 800 further comprises tubing 800b for circulating engine coolant, wherein preferably the tubing 800b is arranged at a distance which is smaller than 5 cm from a section of the suction line 20, and more preferably directly adjacent to a section of the suction line 20. For example, the tubing 800b may extend over a distance which is larger than 200 mm along a section of the suction line 20.

It is noted that the suction line heating system 800 may also be solely electrical, or solely based on heating by engine coolant.

Preferably, the suction line 20 has a length which is larger than 200 mm, more preferably larger than 300 mm, even more preferably larger than 400 mm. Preferably, a distance between a section of the suction line 20 and a bottom wall 201 of the second compartment is smaller than 5 cm, more preferably smaller than 3 cm; wherein preferably a length of said section of the suction line 20 is larger than 200 mm.

Preferably the suction line 20 is configured to suck liquid in at least three different locations 10a, 10b, 10c in the tank, wherein preferably a distance between the each pair of locations is larger than 20% of the maximum dimension of the compartment 200, e.g. larger than 100 mm.

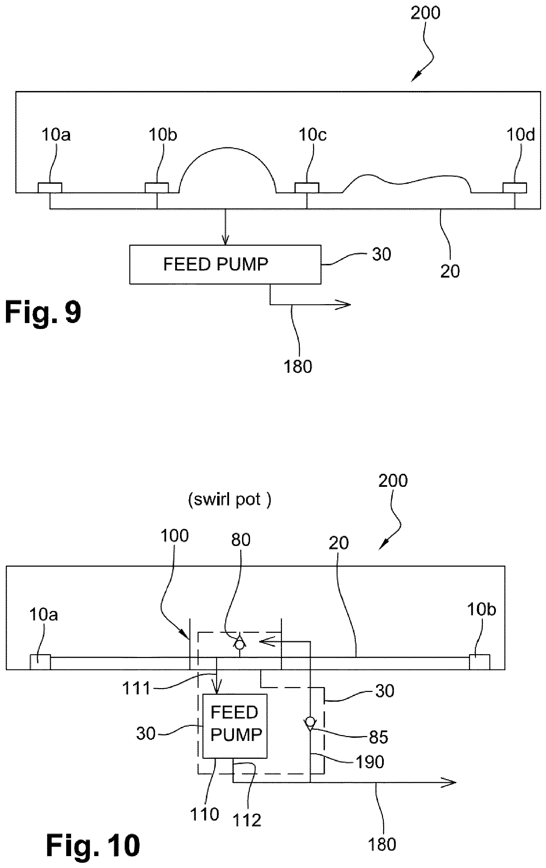

Figure 9 illustrates schematically an exemplary vehicle suction system with a compartment having a bottom side with an irregular shape. As can be seen, the multiple suction points 10a, 10b, 10c, 10d allow to suck liquid from all parts of the tank 200, limiting the dynamic dead volume of the liquid in the tank 200.

Figure 10 illustrates schematically an exemplary vehicle suction system with a feed pump. The vehicle suction system comprises a compartment 200 for storing a liquid L, and a suction line 20 in said compartment 200. The suction line 20 is arranged for sucking liquid out of the compartment and is provided with a plurality of suction orifices 10a, 10b positioned at different positions in the compartment. Each suction orifice 10a, 10b is provided with a blocking means 40 configured for at least partly blocking said suction orifice when the suction orifice is not in the liquid and for allowing liquid to be sucked through the suction orifice when the suction orifice is in the liquid. The suction line 20 is connected to the inlet 111 of a feed pump 110. The feed outlet 112 of the feed pump unit 110 is connected to a feed line 180. Liquid may flow back into a swirlpot 100 in the compartment 200 through a bypass line 190 in which a check valve 85 is arranged. Also, in the event that the two suction points 10a, 10b are closed, liquid may be sucked out of the swirlpot 100 through check valve 80.

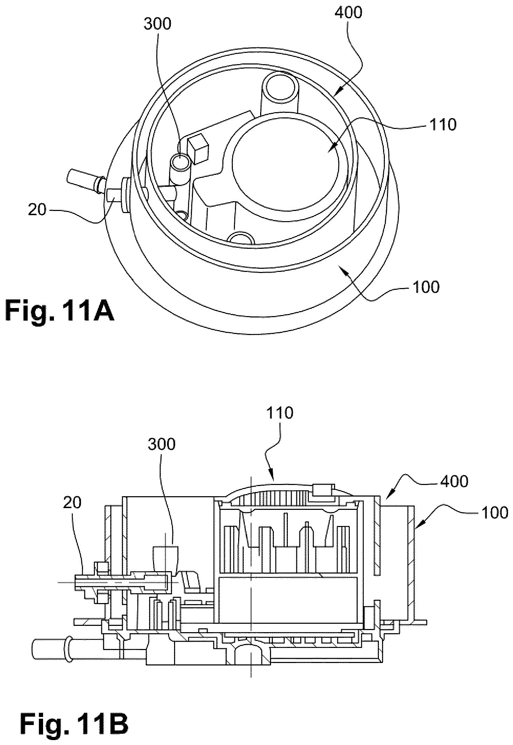

Figures 11A and 11B illustrate an example of a vehicle suction system comprising a suction line extending through a wall of a swirlpot 100. The example is similar to the example of figure 5 with this difference that the suction line 20 passes through the wall of a swirlpot 100 integrated with the compartment 200, and through the wall of a module 400. In such an embodiment, the module 400 may create a further sub-compartment which is in liquid communication with the swirlpot 100, e.g. by providing one or more orifices in the wall of module 400.

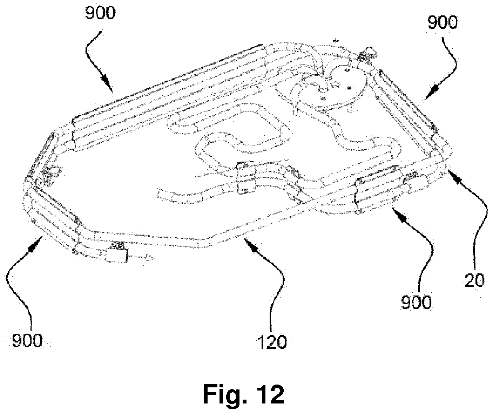

Figure 12 illustrates a partial view of a vehicle suction system according to an embodiment of the invention, which is further developed based on examples comprising the suction line heater, for example the example shown in figure 5. The vehicle suction system comprises here two suction branches, both suction branches being provided with two suction orifices. As can be seen in figure 12, advantageously, a plurality of thermal conductive bridges 900 are connected between the suction line 20 and the suction line heater 120, so as to facilitate the heat conduction between the two. The thermal conductive bridges can be made of any suitable material having good thermal conductivity, preferably of metal, especially preferably of aluminum. It is to be understood that the quantity, the form and the mounting manner of the thermal conductive bridges connected between the suction line and the suction line heater can be decided as needed and are not limited to the example shown in figure 12.

Whilst the principles of the invention have been set out above in connection with specific embodiments, it is to be understood that this description is merely made by way of example and not as a limitation of the scope of protection which is determined by the appended claims.

## Claims

1. A vehicle suction system comprising:
a compartment (200) for storing a liquid (L);
a suction line (20) arranged for sucking liquid out of the compartment (200); said suction line (20) comprising at least one suction branch and the at least one suction branch being provided with at least two suction orifices (10a, 10b, 10c, lOd) positioned at different positions in the compartment (200);
at least one suction orifice of said at least two suction orifices (10a, 10b, 10c, lOd) being provided with a blocking means (40) configured for blocking at least a part of said suction orifice when the suction orifice is not in the liquid and for allowing liquid to be sucked through the suction orifice when the suction orifice is in the liquid;
**characterized in that** the liquid (L) is an aqueous liquid, and **in that** the vehicle suction system comprises a suction line heater (120, 800) configured and arranged for heating at least a portion of the suction line (20), and further comprises at least one thermal conductive bridge (900) connected between the suction line heater (120) and the suction line (20) to facilitate the heat conduction therebetween.

2. The vehicle suction system according to claim 1, comprising at least two suction branches, both suction branches being preferably provided with at least two suction orifices (10a, 10b, 10c, lOd).

3. The vehicle suction system according to any one of the previous claims, wherein the at least two suction orifices (10a, 10b, 10c, lOd) comprises two suction orifices at a distance of each other which is larger than 50 mm, more preferable larger than 100 mm

4. The vehicle suction system according to any one of the previous claims, wherein the at least two suction orifices (10a, 10b, 10c, lOd) are each provided with a blocking means (40) configured for blocking at least a part of said suction orifice when the suction orifice is not in the liquid and for allowing liquid to be sucked through the suction orifice when the suction orifice is in the liquid.

5. The vehicle suction system according to any one of the previous claims, wherein the compartment (200) has a bottom wall (201), a side wall (203) and top wall (202), wherein, in the mounted position of the compartment in the vehicle, the bottom wall (201) corresponds with the lowest wall of the compartment (200); wherein the suction line (20) has a line portion arranged against the bottom wall (201) or at a distance of the bottom wall (201), said distance being smaller than 5 cm, preferably smaller than 3 cm.

6. The vehicle suction system according to any one of the previous claims, wherein the suction line (20) is arranged at least partially in the compartment (200); and/or
wherein the suction line (20) is arranged outside the compartment (200) and is provided with a plurality of line connection portions extending through a wall of the compartment (200) and connecting the suction orifices (10a, 10b, 10c, lOd) in the compartment (200) with the suction line outside of the compartment (200).

7. The vehicle suction system according to any one of the previous claims, wherein the suction line (20) has a line portion inside the compartment (200) with a length which is larger than 200 mm, preferably larger than 300 mm, more preferably larger than 400 mm.

8. The vehicle suction system according to any one of the previous claims, wherein the blocking means (40) comprises a floatable flap configured for allowing the aqueous liquid to pass through the suction orifice when the suction orifice is in the aqueous liquid and for blocking at least a part of said suction orifice when the suction orifice is not in the aqueous liquid, for example a pivotally mounted flap (41) configured for being lifted away from the suction orifice when the suction orifice is in the liquid.

9. The vehicle suction system according to any one of the previous claims, wherein the blocking means (40) comprises a membrane or a filter configured to allow liquid to pass through the filter or membrane when in the liquid, and to block or limit the passage of air and/or vapours when the filter or membrane is not in the liquid.

10. The vehicle suction system according to claim 1, wherein the suction line heater (120, 800) comprises at least one heater (120, 800a) arranged around and/or adjacent a section of the suction line (20), and can further comprise tubing (800b) for circulating engine coolant.

11. The vehicle suction system according to any one of the previous claims, further comprising a pump circuit connected to the suction line (20) and configured for pumping liquid out of the compartment (200) through the suction line.

12. The vehicle suction system according to the previous claim, wherein the pump circuit comprises a jet pump (300) and a feed pump unit (110), said feed pump unit (110) being connected for pumping liquid from another additional compartment (100) to a feed outlet (181); said feed pump unit being further connected for pumping liquid from said other additional compartment through the feed pump unit, through a pressure inlet (320) of the jet pump (300) to an outlet (330) of the jet pump; said outlet of said jet pump being arranged for returning liquid from the suction inlet and from the pressure inlet to said other additional compartment.

13. The vehicle suction system according to claim 11, wherein the pump circuit comprises a feed pump unit (110) with a feed outlet (181) and with a feed inlet connected to the suction line (20); wherein optionally the feed pump unit may be provided in another additional compartment (100).

14. The vehicle suction system according to claim 12 or 13, wherein the compartment (200) is a tank, and wherein the other additional compartment (100) is located in the tank (200).

15. The vehicle suction system according to claim 12 or 13, wherein the other additional compartment is a first tank (100), and the compartment is a second tank (200).

16. The vehicle suction system according to any one of the claims 12-15, further comprising:
an air intake line (710) upstream of a combustion chamber (700) of an internal combustion engine;
an injector (600) configured for injecting liquid in the air intake line or in the combustion chamber;
a feed line (180) between the feed outlet of the feed pump unit (110) and the injector, for feeding said injector with liquid out of the other additional compartment (100).

## Patentansprüche

1. Fahrzeugsauganlage, aufweisend:
eine Kammer (200) zum Speichern einer Flüssigkeit (L),
eine Ansaugleitung (20), die zum Ansaugen von Flüssigkeit aus der Kammer (200) angeordnet ist;
wobei die Ansaugleitung (20) mindestens einen Ansaugzweig aufweist und der mindestens eine Ansaugzweig mit mindestens zwei Ansaugöffnungen (10a, 10b, 10c, 10d) versehen ist, die an unterschiedlichen Positionen in der Kammer (200) angeordnet sind;
mindestens eine Ansaugöffnung der mindestens zwei Ansaugöffnungen (10a, 10b, 10c, 10d) mit einem Blockiermittel (40) versehen ist, das konfiguriert ist, um mindestens einen Teil der Ansaugöffnung zu blockieren, wenn sich die Ansaugöffnung nicht in der Flüssigkeit befindet, und um zu ermöglichen, dass Flüssigkeit durch die Ansaugöffnung angesaugt wird, wenn sich die Ansaugöffnung in der Flüssigkeit befindet;
**dadurch gekennzeichnet, dass** die Flüssigkeit (L) eine wässrige Flüssigkeit ist und dass das Fahrzeugansaugsystem eine Ansaugleitungsheizung (120, 800) aufweist, die konfiguriert und angeordnet ist, um mindestens einen Teil der Ansaugleitung (20) zu erwärmen, und ferner mindestens eine wärmeleitende Brücke (900) aufweist, die zwischen der Ansaugleitungsheizung (120) und der Ansaugleitung (20) angeschlossen ist, um die Wärmeleitung dazwischen zu erleichtern.

2. Fahrzeugsauganlage nach Anspruch 1, aufweisend mindestens zwei Ansaugstutzen, wobei beide Ansaugstutzen vorzugsweise mit mindestens zwei Ansaugöffnungen (10a, 10b, 10c, 10d) versehen sind.

3. Fahrzeugsauganlage nach einem der vorhergehenden Ansprüche, wobei die mindestens zwei Ansaugöffnungen (10a, 10b, 10c, 10d) zwei Ansaugöffnungen in einem Abstand voneinander aufweisen, der größer als 50 mm, vorzugsweise größer als 100 mm ist.

4. Fahrzeugsauganlage nach einem der vorhergehenden Ansprüche, wobei die mindestens zwei Ansaugöffnungen (10a, 10b, 10c, 10d) jeweils mit einem Blockiermittel (40) versehen sind, das konfiguriert ist, um mindestens einen Teil der Ansaugöffnung zu blockieren, wenn sich die Ansaugöffnung nicht in der Flüssigkeit befindet, und zu ermöglichen, dass Flüssigkeit durch die Ansaugöffnung angesaugt wird, wenn sich die Ansaugöffnung in der Flüssigkeit befindet.

5. Fahrzeugsauganlage nach einem der vorhergehenden Ansprüche, wobei die Kammer (200) eine untere Wand (201), eine Seitenwand (203) und eine obere Wand (202) aufweist, wobei in der montierten Position der Kammer im Fahrzeug die unter Wand (201) mit der untersten Wand der Kammer (200) übereinstimmt; wobei die Ansaugleitung (20) einen Leitungsabschnitt aufweist, der an der unteren Wand (201) oder in einem Abstand von der unteren Wand (201) angeordnet ist, wobei der Abstand kleiner als 5 cm, vorzugsweise kleiner als 3 cm ist.

6. Fahrzeugsauganlage nach einem der vorhergehenden Ansprüche, wobei die Ansaugleitung (20) zumindest teilweise in der Kammer (200) angeordnet ist, und/oder wobei die Ansaugleitung (20) außerhalb der Kammer (200) angeordnet ist und mit einer Mehrzahl von Leitungsverbindungsabschnitten versehen ist, die sich durch eine Wand der Kammer (200) erstrecken und die Ansaugöffnungen (10a, 10b, 10c, 10d) in der Kammer (200) mit der Ansaugleitung außerhalb der Kammer (200) verbinden.

7. Fahrzeugsauganlage nach einem der vorhergehenden Ansprüche, wobei die Ansaugleitung (20) einen Leitungsabschnitt innerhalb der Kammer (200) mit einer Länge aufweist, die größer als 200 mm, vorzugsweise größer als 300 mm, besonders bevorzugt größer als 400 mm ist.

8. Fahrzeugsauganlage nach einem der vorhergehenden Ansprüche, wobei das Blockiermittel (40) eine abnehmbare Kappe aufweist, die konfiguriert ist, um zu ermöglichen, dass die wässrige Flüssigkeit durch die Ansaugöffnung hindurchtritt, wenn sich die Ansaugöffnung in der wässrigen Flüssigkeit befindet, und um zumindest einen Teil der Ansaugöffnung zu blockieren, wenn sich die Ansaugöffnung nicht in der wässrigen Flüssigkeit befindet, beispielsweise eine schwenkbar montierte Kappe (41), die konfiguriert ist, um von der Ansaugöffnung weggehoben zu werden, wenn sich die Ansaugöffnung in der Flüssigkeit befindet.

9. Fahrzeugsauganlage nach einem der vorhergehenden Ansprüche, wobei das Blockiermittel (40) eine Membran oder einen Filter aufweist, der konfiguriert ist, um den Durchgang von Flüssigkeit durch den Filter oder die Membran zu ermöglichen, wenn er sich in der Flüssigkeit befindet, und den Durchgang von Luft und/oder Dämpfen zu blockieren oder zu begrenzen, wenn sich der Filter oder die Membran nicht in der Flüssigkeit befindet.

10. Fahrzeugsauganlage nach Anspruch 1, wobei die Ansaugleitungsheizung (120, 800) mindestens eine Heizung (120, 800a) aufweist, die um einen Abschnitt der Ansaugleitung (20) herum und/oder angrenzend an diesen angeordnet ist, und ferner Schläuche (800b) zum Zirkulieren von Motorkühlmittel aufweisen kann.

11. Fahrzeugsauganlage nach einem der vorhergehenden Ansprüche, das ferner einen Pumpenkreislauf aufweist, der mit der Ansaugleitung (20) verbunden und konfiguriert ist, um Flüssigkeit durch die Ansaugleitung aus der Kammer (200) zu pumpen.

12. Fahrzeugsauganlage nach dem vorhergehenden Anspruch, wobei der Pumpenkreislauf eine Strahlpumpe (300) und eine Förderpumpeneinheit (110) aufweist, wobei die Förderpumpeneinheit (110) zum Pumpen von Flüssigkeit aus einer anderen zusätzlichen Kammer (100) mit einem Förderauslass (181) verbunden ist; wobei die Förderpumpeneinheit ferner verbunden ist, um Flüssigkeit aus der anderen zusätzlichen Kammer durch die Förderpumpeneinheit durch einen Druckeinlass (320) der Strahlpumpe (300) zu einem Auslass (330) der Strahlpumpe zu pumpen; wobei der Auslass der Strahlpumpe angeordnet ist, um Flüssigkeit von dem Ansaugeinlass und von dem Druckeinlass zu der anderen zusätzlichen Kammer zurückzuführen.

13. Fahrzeugsauganlage nach Anspruch 11, wobei der Pumpenkreislauf eine Förderpumpeneinheit (110) mit einem Förderauslass (181) und mit einem mit der Ansaugleitung (20) verbundenem Fördereinlass aufweist, wobei die Förderpumpeneinheit optional in einer weiteren zusätzlichen Kammer (100) vorgesehen sein kann.

14. Fahrzeugsauganlage nach Anspruch 12 oder 13, wobei die Kammer (200) ein Tank ist und die andere zusätzliche Kammer (100) in dem Tank (200) angeordnet ist.

15. Fahrzeugsauganlage nach Anspruch 12 oder 13, wobei die andere zusätzliche Kammer ein erster Tank (100) und die Kammer ein zweiter Tank (200) ist.

16. Fahrzeugsauganlage nach einem der Ansprüche 12-15; ferner aufweisend:
eine Luftansaugleitung (710) stromaufwärts von einer Verbrennungskammer (700) eines Verbrennungsmotors;
einen Injektor (600), der zum Einspritzen von Flüssigkeit in die Luftansaugleitung oder in den Brennraum konfiguriert ist;
eine Förderleitung (180) zwischen dem Förderauslass der Förderpumpeneinheit (110) und dem Injektor, um den Injektor mit Flüssigkeit aus der anderen zusätzlichen Kammer (100) zu versorgen.

## Revendications

1. Un système d'aspiration de véhicule comprenant :
un compartiment (200) pour le stockage d'un liquide (L) ;
une conduite d'aspiration (20) disposée pour aspirer du liquide hors du compartiment (200) ;
ladite conduite d'aspiration (20) comprenant au moins une branche d'aspiration et ladite au moins une branche d'aspiration étant munie d'au moins deux orifices d'aspiration (10a, 10b, 10c, 10d) positionnés à différentes positions dans le compartiment (200) ;
au moins un orifice d'aspiration desdits orifices d'aspiration (10a, 10b, 10c, 10d) étant muni d'un moyen de blocage (40) configuré pour bloquer au moins une partie dudit orifice d'aspiration lorsque l'orifice d'aspiration n'est pas dans le liquide et pour permettre l'aspiration du liquide à travers l'orifice d'aspiration lorsque l'orifice d'aspiration est dans le liquide ;
**caractérisé en ce que** le liquide (L) est un liquide aqueux, et **en ce que** le système d'aspiration de véhicule comprend un dispositif de chauffage de conduite d'aspiration (120, 800) configuré et disposé pour chauffer au moins une partie de la conduite d'aspiration (20) et comprend en outre au moins un pont conducteur thermique (900) relié entre le dispositif de chauffage de conduite d'aspiration (120) et la conduite d'aspiration (20) afin de faciliter la conduction thermique entre les deux.

2. Le système d'aspiration de véhicule selon la revendication 1, comprenant au moins deux branches d'aspiration, les deux branches d'aspiration étant toutes les deux de préférence pourvues d'au moins deux orifices d'aspiration (10a, 10b, 10c, 10d).

3. Le système d'aspiration de véhicule selon l'une quelconque des revendications précédentes, dans lequel lesdits au moins deux orifices d'aspiration (10a, 10b, 10c, 10d) comprennent deux orifices d'aspiration à une distance l'un de l'autre supérieure à 50 mm, plus préférablement supérieure à 100 mm.

4. Le système d'aspiration de véhicule selon l'une quelconque des revendications précédentes, dans lequel lesdits au moins deux orifices d'aspiration (10a, 10b, 10c, 10d) sont chacun munis d'un moyen de blocage (40) configuré pour bloquer au moins une partie dudit orifice d'aspiration lorsque l'orifice d'aspiration n'est pas dans le liquide et pour permettre l'aspiration du liquide à travers l'orifice d'aspiration lorsque l'orifice d'aspiration est dans le liquide.

5. Le système d'aspiration de véhicule selon l'une quelconque des revendications précédentes, dans lequel le compartiment (200) a une paroi inférieure (201), une paroi latérale (203) et une paroi supérieure (202), dans lequel, en position d'installation du compartiment dans le véhicule, la paroi inférieure (201) correspond à la paroi la plus basse du compartiment (200) ; et dans lequel la conduite d'aspiration (20) a une partie de conduite disposée contre la paroi inférieure (201) ou à une distance de la paroi inférieure (201), ladite distance étant inférieure à 5 cm, de préférence inférieure à 3 cm.

6. Le système d'aspiration de véhicule selon l'une quelconque des revendications précédentes, dans lequel la conduite d'aspiration (20) est disposée au moins partiellement dans le compartiment (200); et/ou
dans lequel la conduite d'aspiration (20) est disposée à l'extérieur du compartiment (200) et est pourvue d'une pluralité de parties de connexion de conduite s'étendant à travers une paroi du compartiment (200) et reliant les orifices d'aspiration (10a, 10b, 10c, 10d) dans le compartiment (200) avec la conduite d'aspiration à l'extérieur du compartiment (200).

7. Le système d'aspiration de véhicule selon l'une quelconque des revendications précédentes, dans lequel la conduite d'aspiration (20) comporte une partie de conduite à l'intérieur du compartiment (200) d'une longueur supérieure à 200 mm, de préférence supérieure à 300 mm, plus préférentiellement supérieure à 400 mm.

8. Le système d'aspiration de véhicule selon l'une quelconque des revendications précédentes, dans lequel le moyen de blocage (40) comprend un volet flottable configuré pour permettre au liquide aqueux de passer à travers l'orifice d'aspiration lorsque l'orifice d'aspiration est dans le liquide aqueux et pour bloquer au moins une partie dudit orifice d'aspiration lorsque l'orifice d'aspiration n'est pas dans le liquide aqueux, par exemple, un volet monté en pivot (41) configuré pour être soulevé à distance de l'orifice d'aspiration lorsque l'orifice d'aspiration est dans le liquide.

9. Le système d'aspiration de véhicule selon l'une quelconque des revendications précédentes, dans lequel le moyen de blocage (40) comprend une membrane ou un filtre configuré pour permettre au liquide de passer à travers le filtre ou la membrane lorsque le filtre ou la membrane est dans le liquide, et pour bloquer ou limiter le passage de l'air et/ou des vapeurs lorsque le filtre ou la membrane n'est pas dans le liquide.

10. Le système d'aspiration de véhicule selon la revendication 1, dans lequel le dispositif de chauffage de conduite d'aspiration (120, 800) comprend au moins un dispositif de chauffage (120, 800a) disposé autour et/ou à côté d'une section de la conduite d'aspiration (20), et peut en outre comprendre des tubes (800b ) pour la circulation d'une fluide de refroidissement de moteur.

11. Le système d'aspiration de véhicule selon l'une quelconque des revendications précédentes, comprenant en outre un circuit de pompe relié à la conduite d'aspiration (20) et configuré pour pomper le liquide hors du compartiment (200) à travers la conduite d'aspiration.

12. Le système d'aspiration de véhicule selon la revendication précédente, dans lequel le circuit de pompe comprend une pompe à jet (300) et une unité de pompe d'alimentation (110), ladite unité de pompe d'alimentation (110) étant connectée pour pomper le liquide d'un autre compartiment supplémentaire (100) à une sortie d'alimentation (181) ; ladite unité de pompe d'alimentation étant en outre connectée pour pomper le liquide dudit autre compartiment supplémentaire à travers l'unité de pompe d'alimentation, par une entrée de pression (320) de la pompe à jet (300) jusqu'à une sortie (330) de la pompe à jet ; ladite sortie de ladite pompe à jet étant disposée pour renvoyer le liquide de l'entrée d'aspiration et de l'entrée de pression vers ledit autre compartiment supplémentaire.

13. Le système d'aspiration de véhicule selon la revendication 11, dans lequel le circuit de pompe comprend une unité de pompe d'alimentation (110) avec une sortie d'alimentation (181) et une entrée d'alimentation reliée à la conduite d'aspiration (20); dans lequel éventuellement l'unité de pompe d'alimentation peut être prévue dans un autre compartiment supplémentaire (100).

14. Le système d'aspiration de véhicule selon la revendication 12 ou 13, dans lequel le compartiment (200) est un réservoir, et dans lequel l'autre compartiment supplémentaire (100) est situé dans le réservoir (200).

15. Le système d'aspiration de véhicule selon la revendication 12 ou 13, dans lequel l'autre compartiment supplémentaire est un premier réservoir (100), et le compartiment est un deuxième réservoir (200).

16. Le système d'aspiration de véhicule selon l'une quelconque des revendications 12-15, comprenant en outre :
une conduite d'admission d'air (710) en amont d'une chambre de combustion (700) d'un moteur à combustion interne ;
un injecteur (600) configuré pour injecter du liquide dans la conduite d'admission d'air ou dans la chambre de combustion ;
une conduite d'alimentation (180) entre la sortie d'alimentation de l'unité de pompe d'alimentation (110) et l'injecteur, pour alimenter ledit injecteur avec du liquide provenant de l'autre compartiment supplémentaire (100).
